# EUROPEAN PATENT SPECIFICATION

(11) **EP 4 375 191 B1**
(45) Date of publication and mention of the grant of the patent: **30.09.2026**
(21) Application number: 22210036.4
(22) Date of filing: 28.11.2022
(51) Int. Cl.: B64D 11/04, A23G 9/00, A47J 43/00, B01F 27/192, B01F 27/2121, B01F 27/213, B01F 27/88, B01F 33/83, B01F 35/92

(54) **GALLEY INSERT BEVERAGE MAKER**
GETRÄNKEBEREITER FÜR BORDKÜCHENEINSATZ
DISPOSITIF DE FABRICATION DE BOISSONS À INSERT DE CUISINE

(43) Date of publication of application: 29.05.2024
(73) Proprietor: B/E Aerospace, Inc., Winston-Salem, NC 27105 (US)
(72) Inventor: AMONCIO, Ariel, 4232 Philippines (PH); DONDOY, Jordan, 4232 Philippines (PH); PEREZ, Louie, 4232, Philippines (PH); ALBINA, John Ervin, 4232 Philippines (PH)
(74) Representative: Dehns

(56) References cited:
- EP-A1- 3 708 036
- WO-A1-2009/113176
- WO-A1-2014/133582
- WO-A1-2016/179107
- WO-A2-2008/103665
- AT-B- 317 939
- US-A- 3 837 587
- US-A1- 2017 094 990
- US-B2- 11 134 703
- US-B2- 9 867 387

## Description

### FIELD

This disclosure relates to a beverage maker for making frozen slush drinks. More particularly, the disclosure relates to a galley insert beverage maker for making chilled drinks, such as frozen slush drinks.

### BACKGROUND

Hot water dispensers are used in vehicle galleys (for the provision of hot drinks such as tea and coffee) and cold beverages (such as beer, cider, and soft drinks) are served on aircraft using cans and bottles, usually served with a cup containing ice. Therefore, the beverage options available on aircraft are limited, and with customers becoming more demanding, there is a need for the provision of alternative beverages on vehicles such as aircraft.

WO 2016/179107 A1 discloses a blending and food processing appliance for blending beverages from solid ingredients, wherein spiral blades each comprise a first end connected to a shaft at a predetermined distance from a blade arrangement, and a second end connected to opposing ends of a crossbar.

US 3837587A discloses a combination ice crusher-drink mixer appliance which serves either as an ice crusher or as a drink mixer or as a combination of the two. An electric motor is operably connected to an upwardly inclined ice-crushing auger which is rotatable in an ice-crushing barrel whereby ice cubes introduced are simultaneously crushed, sized, and transported upwardly to a crushed ice discharge port at the upper end of the barrel. A crushed-ice-receiving and drink-mixing container has an agitator mounted off centre in the bottom thereof.

WO 2009/113176 A1 discloses an apparatus for producing a soft ice drink that is provided with an ice-shaving unit and a mixing unit comprising a rotating blade for shaving and agitating the ice powder in a receiver.

### SUMMARY

According to this disclosure, there is provided a beverage making system as defined in claim 1.

Preferred embodiments are defined by the dependent claims.

In embodiments, the body comprises a first meshing element (e.g. protruding from the floor of the cavity), which is coupled (e.g. fixedly coupled) to the motor, and the pitcher comprises a second meshing element (e.g. on its base), which is coupled (e.g. fixedly coupled) to the blending element and/or to the stirring element, wherein the first and second meshing elements are configured to be mated (e.g. rotationally fixed with respect to one another) when the pitcher is received inside (e.g. correctly placed in) the cavity such that rotational drive is transferred (directly or indirectly) from the motor to the blending element and/or to the stirring element.

In embodiments, the blending element is configured to be removable from the pitcher.

In embodiments, the stirring element is formed as an Archimedes screw.

In embodiments, the blending element comprises a third meshing element (e.g. at the top of the blending element) and the stirring element comprises a fourth meshing element (e.g. at the base of the meshing element ), wherein the third and fourth meshing elements are configured to be mated (e.g. rotationally fixed with respect to one another) when the stirring element is attached to the top of the blending element such that rotational drive is transferred from the blending element to the stirring element (e.g. from the motor to the stirring element via the first meshing element, second meshing element, third meshing element, and fourth meshing element).

In embodiments, the pitcher comprises a drive shaft at the base of the pitcher, coupled to the meshing element, wherein the drive shaft comprises a fifth meshing element (e.g. at the top of the drive shaft), such that the drive shaft extends between the second meshing element and the fifth meshing element, wherein the fourth and the fifth meshing elements are configured to be mated (e.g. rotationally fixed with respect to one another) when the stirring element is attached to the drive shaft such that rotational drive is transferred from the drive shaft to the stirring element (e.g. from the motor to the stirring element via the first meshing element, second meshing element, drive shaft, fifth meshing element, and fourth meshing element). In such embodiments, the stirring element may be attached to the drive shaft in place of the blending element (e.g. the blending element and stirring element are interchangeable).

In embodiments, the blending element comprises a sixth meshing element (e.g. at the base of the blending element) wherein the fifth and the sixth meshing elements are configured to be mated (e.g. rotationally fixed with respect to one another) when the blending element is attached to the drive shaft such that rotational drive is transferred from the drive shaft to the blending element (e.g. from the motor to the blending element via the first meshing element, second meshing element, drive shaft, fifth meshing element, and sixth meshing element) .

In embodiments, a plurality of the meshing elements are configured to be compatible, as such, it will be understood that the above described embodiments are not mutually exclusive and a meshing element may be configured to be mated with a plurality of other meshing elements.

In embodiments, the blending speed is greater than 5000 rpm (e.g. greater than 6000rpm, greater than 7000rpm). In embodiments the stirring speed is below 500rpm (e.g. below 400rpm, below 300rpm, below 200rpm).

In embodiments, the blending speed is 7000 rpm and the stirring speed is 100 rpm.

In embodiments, the motor may comprise a gearbox, and the different speeds may be achieved by changing gear, whilst the motor itself operates at a constant rotational speed.

In embodiments, the cooling system comprises a cooling element located proximal to (e.g. at or close to the location of) the pitcher. In embodiments, the cooling element is in thermal communication with the pitcher.

In embodiments, the cooling element is configured to be in contact with (e.g. touching) an outer surface of the pitcher when the pitcher is received within the cavity. In such embodiments, the thermal coupling between the pitcher and the cooling element may be improved.

In embodiments, the cooling element comprises an evaporator element, and the cooling system further comprises a condenser element located remote from the evaporator element, and a compressor fluidly connected between the evaporator element and the condenser element. In such embodiments, the cooling system will work by circulating a refrigerant between the evaporator element and the condenser element, as is known.

In embodiments the cooling system is configured to cool the pitcher to sub-zero temperatures (temperatures lower than 0°C), for example, in embodiments the cooling system is configured to cool the pitcher to temperatures in the range 0°C to - 6°C. Preferably, the cooling system is configured to cool the pitcher (and hence the contents of the pitcher) to a temperature of approximately -3°C.

In embodiments, the body comprises one or more guide rails configured to cooperate with corresponding guide features on the vehicle galley compartment, wherein the guide rails comprise insulation configured to reduce the transfer of vibrations from the body to the vehicle galley compartment.

It will be understood that references made herein to the terms "below", "above", "top", "bottom", "higher", "lower", "base" are intended to refer to the situation where the galley insert chilled beverage device is in its normal orientation (the orientation shown in the Figures).

### BRIEF DESCRIPTION OF DRAWINGS

One or more non-limiting examples will now be described, by way of example only, and with reference to the accompanying figures in which:
Figure 1 shows a perspective view of a vehicle galley, and a galley insert beverage making system in accordance with an embodiment of the invention;
Figure 2 shows a perspective view of the galley insert beverage making system of Figure 1;
Figure 3 shows a cutaway view of a galley insert beverage making system in accordance with an embodiment of the invention;
Figure 4 shows an exploded view of a pitcher system;
Figure 5 shows a schematic diagram of first and second meshing elements for use in the galley insert beverage making system;
Figure 6 shows a method of using the galley insert beverage making system.

The below described embodiments will be understood to be exemplary only. Further, although the below described embodiments are discussed in relation to an aircraft galley, it will be understood that the gallery insert beverage making system of the present disclosure may be used in any vehicle galley. For example, the galley of a coach, or a train. Further, it is envisaged that the novel concepts disclosed herein may be applied to systems independent of vehicle galleys.

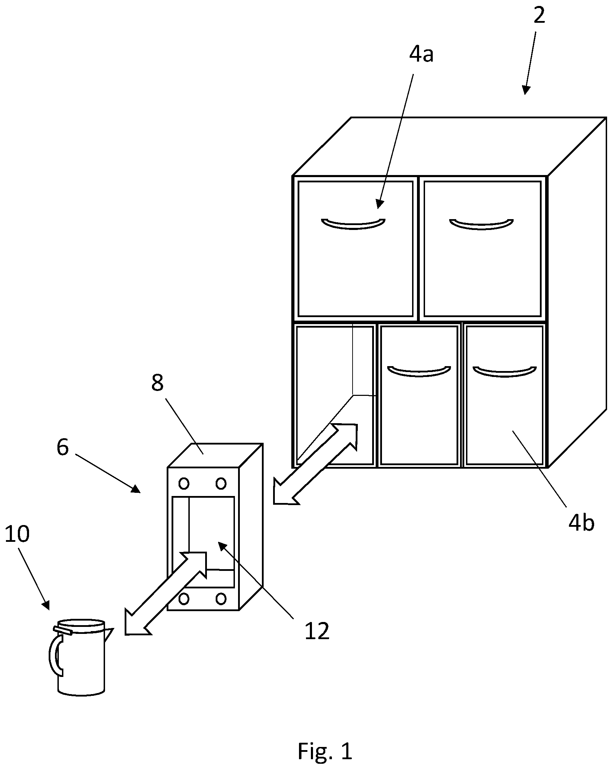

Figure 1 shows a vehicle galley 2 (such as an aircraft galley), containing a plurality of galley compartments 4a, 4b. Figure 1 also shows a gallery insert beverage making system 1 configured to be received within a galley compartment 4a, 4b. In the illustrated embodiment, the vehicle galley 2 comprises two sizes of compartment 4a, 4b, large galley compartments 4a and small galley compartments 4b. The large compartments 4a may house larger appliances such as galley ovens (not shown) whilst the small compartments 4b may be used for beverage makers or storage. In the illustrated embodiment, the gallery insert beverage making system 6 is configured to be received within a small galley compartment 4b.

As can be seen from Figure 1, the gallery insert beverage making system 6 comprises two main parts, a body 8, which is approximately cuboidal, and is shaped and sized to be received within the galley compartment 4b, and a pitcher system 10. The body 8 defines a cavity 12 which is configured to receive the pitcher system 10. The pitcher system 10 may therefore be removed from the cavity 12 when preparing and serving beverages (e.g. to fill and empty the pitcher system 10).

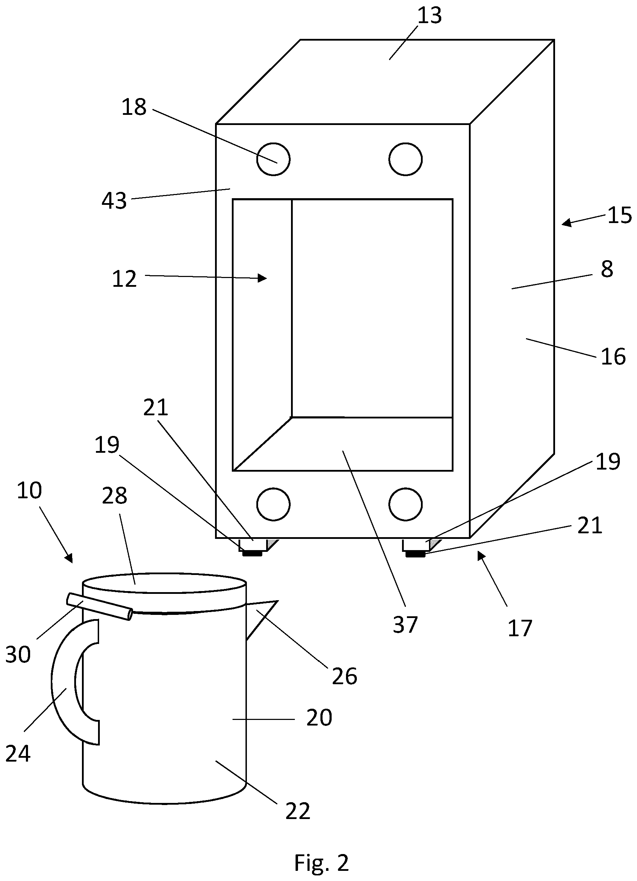

Figure 2 shows an enlarged view of the galley insert beverage making system 6. The body 8 comprises a front face 14 which defines an opening into the cavity 12, a back face 15 opposite the front face 14, a top face 13, a bottom face 17, and a pair of side faces 16 which extend between the front face 14 and the back face 15, and are perpendicular to the top and bottom faces 13, 17. A plurality of input buttons 18 (four in the illustrated embodiment), configured to accept user inputs, are provided on the front face 14. A plurality of guide rails 19 (two in the illustrated embodiment) are provided on the bottom face 17 of the body 8. These guide rails 19 are configured to align with rails or channels inside the galley compartment 4b (not shown) to aid the secure fitting of the body 8 inside the galley compartment 4b. The guide rails 19 comprise rubber insulating strips 21, the function of which is discussed below.

The pitcher system 10 comprises a pitcher 20 comprising an approximately cylindrical container 22, a handle 24, a pouring spout 26, a lid 28, and a hinge 30 connecting the lid 28 to the container 22 proximal to the handle 24.

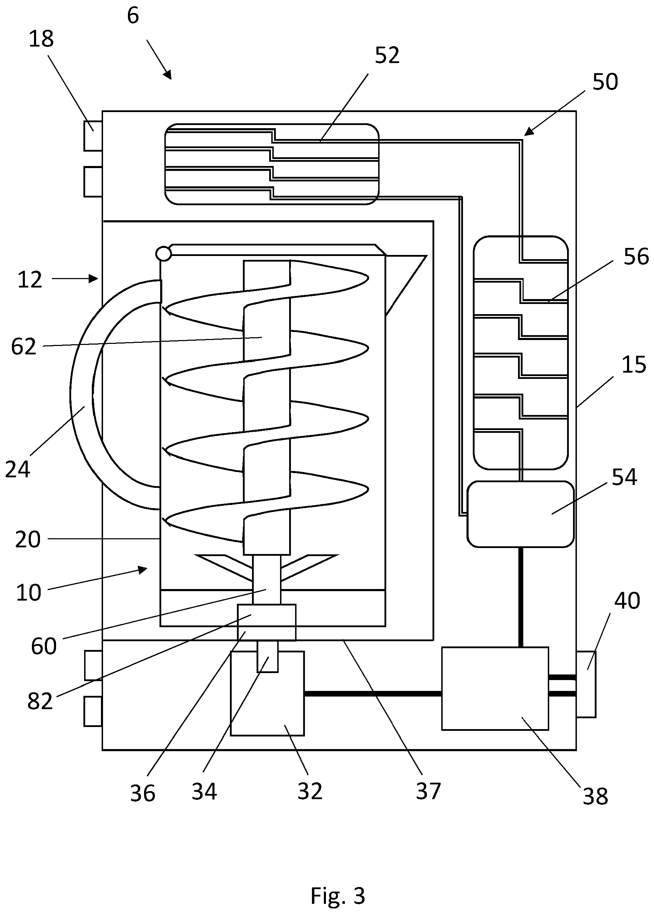

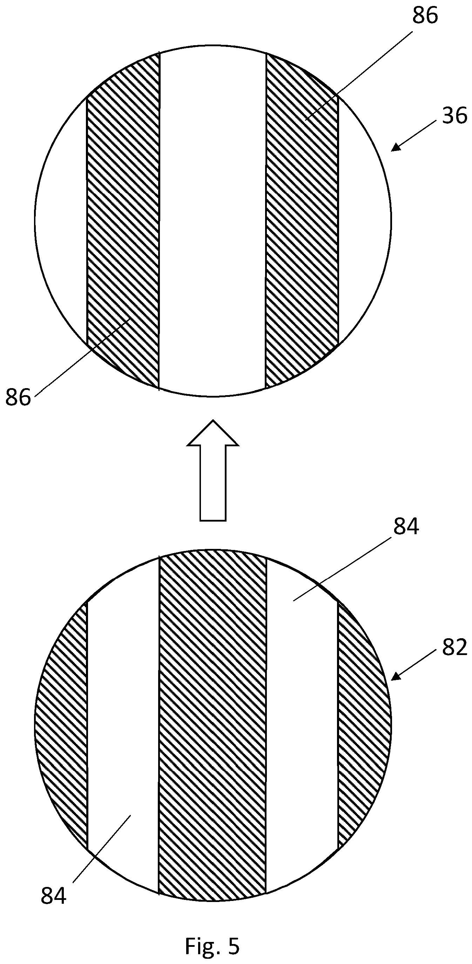

Figure 3 shows a schematic cut-through diagram of the galley insert beverage making system 6 according to an embodiment of the present disclosure. In addition to the external features described above in relation to Figure 1 and Figure 2, it can be seen from Figure 3 that the body 8 comprises a plurality of internal features. The body 8 comprises a motor 32, a drive shaft 34, and a first meshing element 36. The first meshing element 36 is coupled to the motor 32 by the drive shaft 34 such that rotation of the motor results in rotation of the first meshing element 36. The first meshing element 32 protrudes from the floor 37 of the cavity 12. The first meshing element 32 is described in detail below in relation to Figure 5. The motor 32 is controlled by an electronics control module 38, and powered by an external power supply (not shown) which is connected to via a connector 40 provided on the back face 15 of the body 8. The connector 40 may be a universal fitting designed to interface with a corresponding universal fitting provided on the interior of galley compartments 4.

Although it will be understood that any suitable electrical motor may be used, in embodiments, the motor 32 is of the type used in aircraft galley fan ovens to drive the fan. Such a motor 32 is an EC motor having an 80 Watt power rating, and a torque of 0.075 Nm at 7600rpm. This motor is preferable since it is already certified for use in aircraft (for example from the perspective of noise pollution). Noise pollution of the beverage making system is further reduced by the insulating strips 21 which are present on the guide rails 19. The insulating strips 21 help to reduce the amount of vibration which is transferred from the motor 32 to the vehicle galley 2.

The beverage making system 6 further includes a cooling system 50. The cooling system 50 comprises a cooling element 52 which, in the illustrated embodiment, is provided above the cavity 12. In the illustrated embodiment, the cooling element 52 is an evaporator element and the cooling system 50 further comprises a compressor 54, and a condenser element 56. Refrigerant is circulated between the condenser element 56 and the evaporator element 52. The evaporator element 52 converts the refrigerant from liquid to gas. During this process, heat transfer occurs in the evaporator element 52 and the surface of the element 52 is cooled, in turn cooling the pitcher 20 and thus cooling the contents (beverage) inside.

Once the refrigerant has moved through the evaporator element 52, it passes into the compressor 54 which increases pressure on the gas. This causes the gas to condense into a liquid state. As the refrigerant changes into its liquid state, the refrigerant releases the heat which it has absorbed from the pitcher 20. The heat is dispersed by the condenser element 56. The liquid refrigerant then moves back into the evaporator element 52 and the cycle continues.

In the illustrated embodiment, the cooling element 52 is formed as a coil which is located above the pitcher 20 when the pitcher 20 is received in the cavity 12. The illustrated arrangement may be advantageous for cooling since the cooled liquid at the top of the pitcher will naturally fall, creating a convection current inside the pitcher. However, it is envisaged that the cooling element may take any suitable form (e.g. a non-coiled form) and may be placed in any position which is suitably close to the pitcher 20. For example, the cooling element 52 may be provided at the side of the pitcher 20 and/or may partially surround the pitcher 20. The cooling system 50 of the illustrated embodiment is configured to cool the liquid in the pitcher 20 to a temperature in the range 0°C to -3°C.

The handle 24 is thermally insulated from the container 22 in order to prevent discomfort when handling a pitcher 20 that has been cooled to sub-zero temperatures. Sub zero will be understood to mean temperatures lower than 0°C.

It can be seen in Figure 3 that the electronics control module 38 is connected to the cooling system 50 and to the motor 32. For clarity of the Figures, the connections between the electronics control module 38 and the components of the body 8 (such as the cooling system 50, motor 32, and input buttons 18) have been simplified or omitted, but it will be understood that the electronics control module 38 is connected to electrical components of the body 8 as necessary. For example, the electronics control module 38 controls the cooling system 50, and the motor 32, at least partially in response to user inputs received at the input buttons 18.

The pitcher system 10 comprises the pitcher 20, as well as a blending element 60, and a stirring element 62. The pitcher 20 comprises a meshing element 82 which is configured to cooperate with the meshing element 36 of the body. The design of the meshing elements 36, 82 is described in more detail below, with reference to Figure 5.

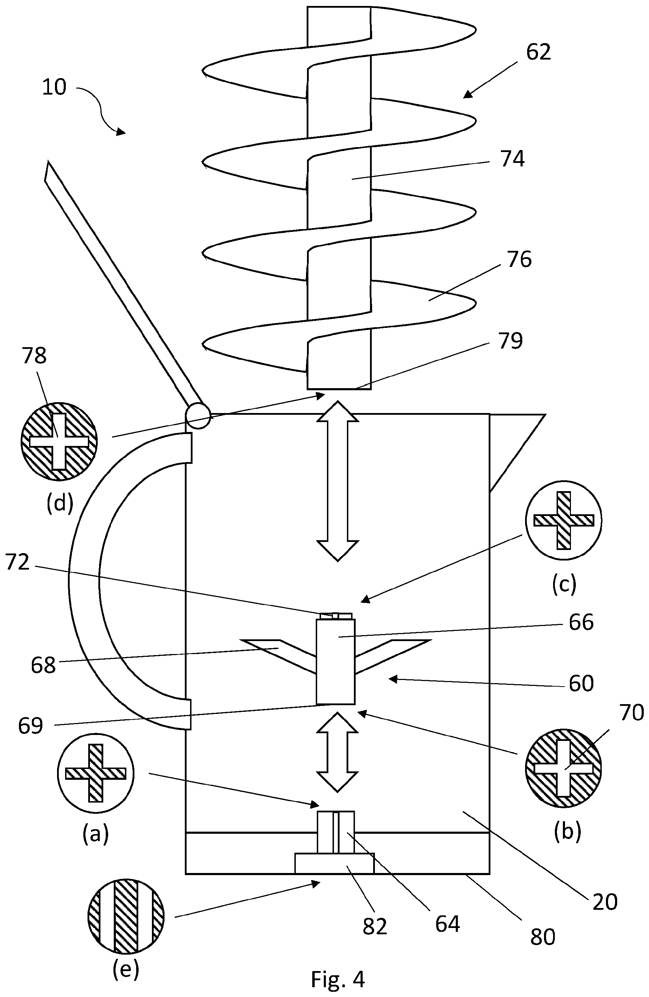

Figure 4 shows the pitcher system 10 in exploded view. The pitcher 20 comprises a drive shaft 64 which is configured to be rotationally driven by the motor 32 when the pitcher 20 is received in the cavity 12. In the illustrated embodiment, the drive shaft 64 has a cross shaped cross-section, as shown in the inset image (a). In each of the inset images (a) - (d) it will be understood that hatched areas are raised relative to white areas.

The blending element 60 comprises a main shaft 66, and a plurality of blades 68. At the base 69 of the blending element, a cross shaped depression 70 is formed, as shown in the inset image (b). The depression 70 is sized to at least partially receive the drive shaft 64. The main shaft 66 further comprises a cross shaped protrusion 72 provided on the top of the main shaft 66. This can be seen in the inset image (c). It will be understood that, in embodiments, the male/female relationship of the main shaft 66 and drive shaft 64 may be reversed without impacting the function of the components.

The stirring element 62 comprises a main shaft 74, and a spiral blade 76 which wraps around the main shaft 74. In the illustrated embodiment, the stirring element 62 is formed as an Archimedes screw, but it will be understood that other spiral blade configurations may also be used. For example, in embodiments, the blade 76 may not be connected to the main shaft 74 along its entire length, and may instead only be joined to the main shaft 74 at its ends.

In the illustrated embodiment, a cross shaped depression 78 is formed at the base 79 of the main shaft 74, as shown in the inset image (d). The depression 78 is sized to at least partially receive the cross shaped protrusion 72 provided on the top of the main shaft 66 of the blending element 60. In the illustrated embodiment, the depressions 70, 78 on the blending element 60 and the stirring element 62 have identical cross sections, such that both the blending element 60 and the stirring element 62 can be fitted directly to the cross-shaped drive shaft 64 of the pitcher 20.

As a result of the interlocking cross shapes, when the stirring element 62, blending element 60, and drive shaft 64 are mated, rotational movement of the drive shaft results in rotational movement of the blending element 60 and stirring element 62.

Although a cross shape is used in the illustrated embodiment, it will be understood that any suitable interlocking shape which prevents relative rotational movement between mated elements could be used, for example a star shape, or simply straight bars.

At its base 80, the pitcher 20 comprises a second meshing element 82. This second meshing element 82 is formed as a circular disk comprising two parallel depressions 84, as shown in the inset image (e). The second meshing element 82 is configured to engage with the first meshing element 36 which is coupled to the motor 32. The first and second meshing elements 36, 82, are shown in Figure 5. The first meshing element 36 comprises two parallel bar protrusions 86 which are sized to engage with the two parallel depressions 84 of the meshing element 82. As a result of the interlocking meshing elements 36, 82, when the first and second meshing elements, 36, 82 are mated, rotational movement of the motor 32, drive shaft 34, and first meshing element 36 results in rotational movement of the second meshing element 82. Although parallel bar shapes are used in the illustrated embodiment, it will be understood that any suitable interlocking shape which prevents relative rotational movement between mated elements could be used, for example the cross shapes discussed above. However, the illustrated embodiment is considered to be advantageous since the parallel bar configuration makes it easier for the pitcher 20 to be slid into place in the cavity 12.

It will of course be understood that, in embodiments, the male/female relationship of each of the pairs of interlocking elements may be reversed, and that such an amendment would not impact the function of the interlocking elements.

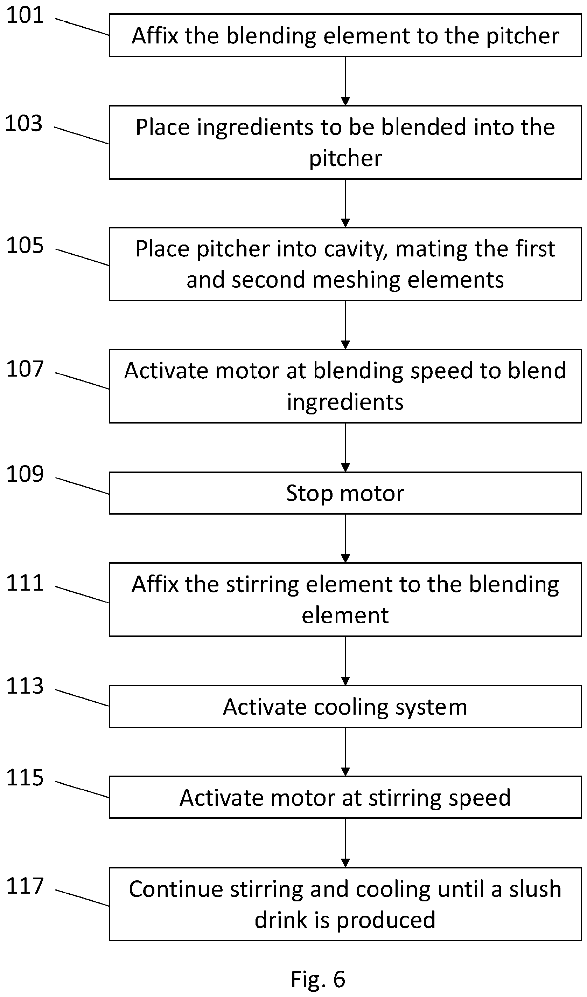

The overall function of the beverage making system 6 will now be described with reference to Figure 6, which shows an outline of the steps for producing a slush drink with a beverage making system 6 according to the present disclosure. At step 101, the blending element 60 is affixed to the pitcher 20 as described above in relation to Figure 4. At step 103, the lid 28 of the pitcher 20 is opened and the ingredients (such as fruits) are placed into the pitcher 20. At step 105, the pitcher 20 is placed into the cavity 12 of the body 8. In placing the pitcher 20 into the cavity 12, it must be ensured that the first and second meshing elements 36, 82 are mated.

The motor 32 is configured to operate at two speeds, a blending speed, and a stirring speed. The speed at which the motor 32 operates is controlled by the electronics control module 38. In the illustrated embodiment, the blending speed is 7000rpm whilst the stirring speed is 100rpm. In embodiments, the electronics control module 38 may operate a set of instructions such that the speed of the motor 32 is controlled automatically. For example, a user may simply initiate a beverage making sequence. However, in the illustrated embodiment, the operating speed of the motor 32 is manually selected by the user, using the input buttons 18.

At step 107, a user gives an input using a button 18 that the motor 32 should start operating at the blending speed. The electronics control module 38 therefore instructs the motor 32 to operate at the blending speed. Due to the coupling of the motor 32, drive shaft 34, first meshing element 36, second meshing element 82, pitcher drive shaft 64 and blending element 60, the ingredients are blended by the rotating blades 68.

Once the ingredients are blended, at step 109, the motor 32 is stopped. In embodiments, the electronics control module 38 may instruct the motor 32 to stop automatically, for example as a result of a predetermined blending time being reached. In the illustrated embodiment however, the user instructs the motor 32 to stop operating by providing an input using a button 18.

At step 111, once the blending element 60 has stopped rotating, the stirring element 62 is manually fitted to the top of the blending element 60, as described above in relation to Figure 4. It is envisaged that an automatic mechanism for fitting the stirring element could be devised.

At step 113, the cooling system 50 is activated. It will be understood that in embodiments, in order to speed up the process, the cooling system 50 may be activated earlier, for example at the same time as the ingredients are being blended. In embodiments, the electronics control module 38 may operate a set of instructions such that the cooling system 50 is controlled automatically. For example, a user may simply initiate a beverage making sequence. However, in the illustrated embodiment, the cooling system 50 is manually activated by the user, using the input buttons 18.

At the same time, at step 115, a user gives an input using a button 18 that the motor 32 should start operating at the stirring speed. The electronics control module 38 therefore instructs the motor 32 to operate at the stirring speed. Due to the coupling between the blending element 60 and the stirring element 62, the stirring element 62 is driven to rotate at the stirring speed. As is known, continuously stirring the liquid with a spiral blade 76 whilst it freezes disperses the ice crystals and prevents the liquid from freezing solid, instead producing a slushy liquid. This stirring and cooling is continued, at step 117, until a slush drink is produced.

In the described embodiment, input buttons are provided to accept user inputs. It will be understood that any suitable user input device may be used in place of or in addition to input buttons, such as knobs, dials, touch screens toggle switches etc.

The galley insert beverage making system of the present disclosure may therefore enable the production of chilled drinks (e.g. such as frozen slush drinks) within a vehicle galley (such as an aircraft galley). This offers an improved customer experience over the usual offering of hot water, or cold beverages served from cans or bottles.

It will be seen from the above, that in some embodiments, the design of the pitcher system improves the ease of cleaning.

It will be seen from the above, that in some embodiments, the design of the pitcher system allows blending to be carried out without the stirring element obstructing the blending process.

It will be seen from the above that, in some embodiments, the design of the stirring element may improve the circulation of liquid inside the pitcher and prevent the grouping of ice crystals.

It will be seen from the above that, in some embodiments, it may be possible to leave the blending element inside the pitcher whilst a stirring process is occurring using the stirring element. This prevents the requirement for a user to either reach into the liquid, or empty out the liquid, in order to retrieve the blending element before the stirring element can be fitted.

It will be seen from the above that, in some embodiments, the transmission of noise from the motor into the galley compartment may be reduced.

It will therefore be seen that in accordance with the above disclosed embodiments, slush drinks made from solid ingredients, such as fruit, can be produced using a single system. More particularly, such drinks can be produced on a vehicle such as an aircraft.

## Claims

1. A beverage making system (6) for producing frozen slush drinks comprising:
a body (8) comprising:
a cooling system (50); and
a motor (32); and
a pitcher system (10) comprising:
a pitcher (20);
a blending element (60), comprising a main shaft (66) and one or more blending blades (68) protruding from the shaft (66), configured to be rotationally driven by the motor (32); and
a stirring element (62) configured to be rotationally driven by the motor (32),
wherein
the stirring element (62) comprises a main shaft (74) and a stirring blade (76) having a spiral shape which wraps around the main shaft (74), and the stirring element (62) is configured to removably attach to the top of the blending element (60),
wherein the body (8) defines a cavity (12) configured to receive the pitcher (20), and wherein the beverage making system (6) is configured such that the cooling system cools the pitcher (20),
wherein the motor (32) is configured to operate at at least two rotational speeds, a blending speed, and a stirring speed, wherein the blending speed is greater than the stirring speed, and
wherein the system (6) is configured such that, the motor (32) can be operated at the blending speed with only the blending element (60) attached, and that the stirring element (62) can be affixed to the blending element (60) before the motor (32) is operated at the stirring speed.

2. The beverage making system (6) of claim 1, wherein the blending element (60) is configured to be removable from the pitcher (20).

3. The beverage making system (6) of claim 1 or claim 2, wherein the body (8) comprises a first meshing element (36) which is coupled to the motor (32), and wherein the pitcher (10) comprises a second meshing element (82) which is coupled to the blending element (60) and/or to the stirring element (62), wherein the first and second meshing elements (36, 82) are configured to mesh when the pitcher (10) is received inside the cavity (12) such that rotational drive is transferred from the motor (32) to the blending element (60) and/or to the stirring element (62).

4. The beverage making system (6) of any preceding claim, wherein the blending element (60) comprises a third meshing element (72) and wherein the stirring element (62) comprises a fourth meshing element (78), wherein the third and fourth meshing elements (72, 78) are configured to mesh when the stirring element (62) is attached to the top of the blending element (60) such that rotational drive is transferred from the blending element (60) to the stirring element (62).

5. The beverage making system (6) of any preceding claim, wherein the blending speed is greater than 5000 RPM, and/or wherein the stirring speed is below 500RPM.

6. The beverage making system (6) of any preceding claim, wherein the cooling system (50) comprises a cooling element (52) located proximal to the cavity (12) such that the cooling element (52) is proximal to the pitcher (20) when the pitcher (20) is received within the cavity (12).

7. The beverage making system (6) of claim 6, wherein the cooling element (52) is configured to be in contact with an outer surface of the pitcher (20) when the pitcher (20) is received within the cavity (12).

8. The beverage making system (6) of claim 6 or claim 7, wherein the cooling element (52) comprises an evaporator element, and wherein the cooling system (50) further comprises a condenser element (56) located remote from the evaporator element, and a compressor (54) fluidly connected between the evaporator element (52) and the condenser element (56).

9. The beverage making system (6) of any preceding claim, wherein the cooling system (50) is configured to cool the beverage to sub-zero temperatures.

10. The beverage making system (6) of any preceding claim, wherein the beverage making system (6) is a galley insert beverage making system, wherein the body (8) is configured to be inserted into a vehicle galley compartment (4b).

11. The galley insert beverage making system (6) of claim 10, wherein the body (8) comprises one or more guide rails (19) configured to cooperate with corresponding guide features on the vehicle galley compartment (4b), wherein the guide rails (19) comprise insulation (21) configured to reduce the transfer of vibrations from the body (8) to the vehicle galley compartment (4b).

## Patentansprüche

1. Getränkeherstellungssystem (6) zum Herstellen von gefrorenen Slush-Getränken, umfassend:
einen Körper (8), umfassend:
ein Kühlsystem (50); und
einen Motor (32); und
ein Krugssystem (10), umfassend:
einen Krug (20);
ein Mischelement (60), umfassend eine Hauptwelle (66) und eine oder mehrere Mischklingen (68), die von der Welle (66) abstehen, ausgelegt, um von dem Motor (32) drehangetrieben zu werden; und
ein Rührelement (62), ausgelegt, um von dem Motor (32) drehangetrieben zu werden,
wobei das Rührelement (62) eine Hauptwelle (74) und eine Rührklinge (76) umfasst, die eine Spiralform aufweist, die sich um die Hauptwelle (74) wickelt, und das Rührelement (62) ausgelegt ist, um abnehmbar an der Oberseite des Mischelements (60) befestigt zu werden,
wobei der Körper (8) einen Hohlraum (12) definiert, der ausgelegt ist, um den Krug (20) aufzunehmen, und wobei das Getränkeherstellungssystem (6) derart ausgelegt ist, dass das Kühlsystem den Krug (20) kühlt,
wobei der Motor (32) ausgelegt ist, um bei mindestens zwei Drehzahlen, einer Mischgeschwindigkeit und einer Rührgeschwindigkeit betrieben zu werden, wobei die Mischgeschwindigkeit größer als die Rührgeschwindigkeit ist, und wobei das System (6) derart ausgelegt ist, dass der Motor (32) bei der Mischgeschwindigkeit betrieben werden kann, wobei nur das Mischelement (60) befestigt ist, und dass das Rührelement (62) an dem Mischelement (60) angebracht werden kann, bevor der Motor (32) bei der Rührgeschwindigkeit betrieben wird.

2. Getränkeherstellungssystem (6) nach Anspruch 1, wobei das Mischelement (60) ausgelegt ist, um von dem Krug (20) entfernbar zu sein.

3. Getränkeherstellungssystem (6) nach Anspruch 1 oder Anspruch 2, wobei der Körper (8) ein erstes Verzahnungselement (36) umfasst, das mit dem Motor (32) gekoppelt ist, und wobei der Krug (10) ein zweites Verzahnungselement (82) umfasst, das mit dem Mischelement (60) und/oder mit dem Rührelement (62) gekoppelt ist, wobei das erste und das zweite Verzahnungselement (36, 82) ausgelegt sind, um ineinanderzugreifen, wenn der Krug (10) in dem Hohlraum (12) aufgenommen ist, sodass ein Drehantrieb von dem Motor (32) auf das Mischelement (60) und/oder auf das Rührelement (62) übertragen wird.

4. Getränkeherstellungssystem (6) nach einem der vorhergehenden Ansprüche, wobei das Mischelement (60) ein drittes Verzahnungselement (72) umfasst und wobei das Rührelement (62) ein viertes Verzahnungselement (78) umfasst, wobei das dritte und das vierte Verzahnungselement (72, 78) ausgelegt sind, um ineinanderzugreifen, wenn das Rührelement (62) an der Oberseite des Mischelements (60) befestigt ist, sodass ein Drehantrieb von dem Mischelement (60) auf das Rührelement (62) übertragen wird.

5. Getränkeherstellungssystem (6) nach einem der vorhergehenden Ansprüche, wobei die Mischgeschwindigkeit größer als 5000 U/min ist, und/oder wobei die Rührgeschwindigkeit unter 500 U/min liegt.

6. Getränkeherstellungssystem (6) nach einem der vorhergehenden Ansprüche, wobei das Kühlsystem (50) ein Kühlelement (52) umfasst, das sich proximal zu dem Hohlraum (12) befindet, sodass das Kühlelement (52) proximal zu dem Krug (20) ist, wenn der Krug (20) in dem Hohlraum (12) aufgenommen ist.

7. Getränkeherstellungssystem (6) nach Anspruch 6, wobei das Kühlelement (52) ausgelegt ist, um mit einer Außenfläche des Krugs (20) in Kontakt zu sein, wenn der Krug (20) in dem Hohlraum (12) aufgenommen ist.

8. Getränkeherstellungssystem (6) nach Anspruch 6 oder Anspruch 7, wobei das Kühlelement (52) ein Verdampferelement umfasst, und wobei das Kühlsystem (50) ferner ein Kondensatorelement (56) umfasst, das sich entfernt von dem Verdampferelement befindet, und einen Kompressor (54), der zwischen dem Verdampferelement (52) und dem Kondensatorelement (56) fluidverbunden ist.

9. Getränkeherstellungssystem (6) nach einem der vorhergehenden Ansprüche, wobei das Kühlsystem (50) ausgelegt ist, um das Getränk auf Temperaturen unter null zu kühlen.

10. Getränkeherstellungssystem (6) nach einem der vorhergehenden Ansprüche, wobei das Getränkeherstellungssystem (6) ein Galley-Einschub-Getränkeherstellungssystem ist, wobei der Körper (8) ausgelegt ist, um in ein Fahrzeug-Galley-Fach (4b) eingeschoben zu werden.

11. Galley-Einschub-Getränkeherstellungssystem (6) nach Anspruch 10, wobei der Körper (8) eine oder mehrere Führungsschienen (19) umfasst, die ausgelegt sind, um mit entsprechenden Führungsmerkmalen an dem Fahrzeug-Galley-Fach (4b) zusammenzuwirken, wobei die Führungsschienen (19) eine Isolierung (21) umfassen, die ausgelegt ist, um die Übertragung von Vibrationen von dem Körper (8) auf das Fahrzeug-Galley-Fach (4b) zu reduzieren.

## Revendications

1. Système de fabrication de boissons (6) pour la production de boissons glacées granita comprenant :
un corps (8) comprenant :
un système de refroidissement (50) ; et
un moteur (32) ; et
un système de pichet (10) comprenant :
un pichet (20) ;
un élément de mélange (60), comprenant un arbre principal (66) et une ou plusieurs lames de mélange (68) faisant saillie de l'arbre (66), configuré pour être entraîné en rotation par le moteur (32) ; et
un élément agitateur (62) configuré pour être entraîné en rotation par le moteur (32),
dans lequel l'élément agitateur (62) comprend un arbre principal (74) et une lame d'agitation (76) ayant une forme en spirale qui s 'enroule autour de l'arbre principal (74), et l 'élément agitateur (62) est configuré pour se fixer de manière amovible sur le dessus de l'élément de mélange (60),
dans lequel le corps (8) définit une cavité (12) configurée pour recevoir le pichet (20), et dans lequel le système de fabrication de boissons (6) est configuré de sorte que le système de refroidissement refroidisse le pichet (20),
dans lequel le moteur (32) est configuré pour fonctionner à au moins deux vitesses de rotation, une vitesse de mélange et une vitesse d'agitation, dans lequel la vitesse de mélange est supérieure à la vitesse d'agitation, et
dans lequel le système (6) est configuré de sorte que le moteur (32) puisse fonctionner à la vitesse de mélange avec seulement l'élément de mélange (60) attaché, et que l'élément agitateur (62) puisse être fixé à l'élément de mélange (60) avant que le moteur (32) ne fonctionne à la vitesse d'agitation.

2. Système de fabrication de boissons (6) selon la revendication 1, dans lequel l'élément de mélange (60) est configuré pour être amovible du pichet (20).

3. Système de fabrication de boissons (6) selon la revendication 1 ou 2, dans lequel le corps (8) comprend un premier élément d'engrènement (36) qui est couplé au moteur (32), et dans lequel le pichet (10) comprend un deuxième élément d'engrènement (82) qui est couplé à l'élément de mélange (60) et/ou à l'élément agitateur (62), dans lequel les premier et deuxième éléments d'engrènement (36, 82) sont configurés pour s'engrener lorsque le pichet (10) est reçu à l'intérieur de la cavité (12), de sorte que l'entraînement rotatif soit transféré du moteur (32) à l'élément de mélange (60) et/ou à l'élément agitateur (62).

4. Système de fabrication de boissons (6) selon une quelconque revendication précédente, dans lequel l'élément de mélange (60) comprend un troisième élément d'engrènement (72) et dans lequel l'élément agitateur (62) comprend un quatrième élément d'engrènement (78), dans lequel les troisième et quatrième éléments d'engrènement (72, 78) sont configurés pour s'engrener lorsque l'élément agitateur (62) est fixé au sommet de l'élément de mélange (60), de sorte que l'entraînement rotatif soit transféré de l'élément de mélange (60) à l'élément agitateur (62).

5. Système de fabrication de boissons (6) selon une quelconque revendication précédente, dans lequel la vitesse de mélange est supérieure à 5 000 tr/min et/ou dans lequel la vitesse d'agitation est inférieure à 500 tr/min.

6. Système de fabrication de boissons (6) selon une quelconque revendication précédente, dans lequel le système de refroidissement (50) comprend un élément de refroidissement (52) situé à proximité de la cavité (12), de sorte que l'élément de refroidissement (52) soit à proximité du pichet (20) lorsque le pichet (20) est reçu à l'intérieur de la cavité (12).

7. Système de fabrication de boissons (6) selon la revendication 6, dans lequel l'élément de refroidissement (52) est configuré pour être en contact avec une surface extérieure du pichet (20) lorsque le pichet (20) est reçu à l'intérieur de la cavité (12).

8. Système de fabrication de boissons (6) selon la revendication 6 ou la revendication 7, dans lequel l'élément de refroidissement (52) comprend un élément évaporateur, et dans lequel le système de refroidissement (50) comprend en outre un élément condenseur (56) situé à distance de l'élément évaporateur, et un compresseur (54) relié fluidiquement entre l'élément évaporateur (52) et l'élément condenseur (56).

9. Système de fabrication de boissons (6) selon une quelconque revendication précédente, dans lequel le système de refroidissement (50) est configuré pour refroidir la boisson à des températures inférieures à zéro.

10. Système de fabrication de boissons (6) selon une quelconque revendication précédente, dans lequel le système de fabrication de boissons (6) est un système de fabrication de boissons à insert de cuisine, dans lequel le corps (8) est configuré pour être inséré dans un compartiment de cuisine de véhicule (4b).

11. Système de fabrication de boissons à insert de cuisine (6) selon la revendication 10, dans lequel le corps (8) comprend un ou plusieurs rails de guidage (19) configurés pour coopérer avec des éléments de guidage correspondants sur le compartiment de cuisine du véhicule (4b), dans lequel les rails de guidage (19) comprennent une isolation (21) configurée pour réduire le transfert des vibrations du corps (8) au compartiment de cuisine du véhicule (4b).
